# EUROPÄISCHE PATENTSCHRIFT

(11) **EP 2 669 622 B1**
(45) Veröffentlichungstag und Bekanntmachung des Hinweises auf die Patenterteilung: **01.03.2017**
(21) Anmeldenummer: 13170284.7
(22) Anmeldetag: 03.06.2013
(51) Int. Cl.: G01B 11/245, G01B 11/25

(54) **Prüfverfahren und hierzu geeigneter Prüfkopf**
Test method and test head which is suitable for this purpose
Procédé de contrôle et tête de contrôle appropriée pour celui-ci

(30) Priorität: 01.06.2012 DE 102012104745
(43) Veröffentlichungstag der Anmeldung: 04.12.2013
(73) Patentinhaber: SmartRay GmbH, 82515 Wolfratshausen (DE)
(72) Erfinder: Simon, Alexander, 83670 Bad Heilbrunn (DE)
(74) Vertreter: Weickmann & Weickmann PartmbB

(56) Entgegenhaltungen:
- WO-A1-99/00661
- WO-A2-02/29357
- DE-A1- 19 909 534
- US-A1- 2004 239 919
- US-A1- 2005 162 644
- US-A1- 2007 097 359
- US-A1- 2007 280 501

## Beschreibung

### I. Anwendungsgebiet

Die Erfindung betrifft ein Verfahren sowie eine Vorrichtung zum optischen Prüfen einer Prüfkontur.

### II. Technischer Hintergrund

Die Bestimmung der Form 3-dimensionaler Konturen wird in der Industrie häufig benötigt, um definiert angebrachte Konturen einer Qualitätskontrolle zu unterziehen.

Die Ermittlung der Form oder anderer, mit der Oberflächenform zusammenhängender Ergebnisdaten, z. B. des Volumens, einer Prüfkontur, z. B. einer Erhebung, wird dabei häufig mittels des Lichtschnittverfahrens durchgeführt.

Dabei wird ein fächerförmiger, also in nur einer Ebene aufgespreizter, Lichtstrahl, insbesondere einer gerichteten Lichtquelle, etwa ein Laser-Lichtstrahl, auf die zu untersuchende Oberfläche aufgestrahlt, ergibt dort eine Lichtlinie und wird unter einem Winkel, meist einem spitzen Winkel, zur Bestrahlungsrichtung beobachtet, so dass der Verlauf der Lichtlinie auf der Oberfläche dort vorhandene Erhebungen erkennen lässt, indem auch das beobachtete Abbild der Lichtlinie auf einem optischen Sensor, die Konturlinie, dann eine Erhöhung zeigt, wenn der linienförmig auftreffende Lichtstrahl-Fächer über diese Erhebung hinweg verläuft. In der Regel soll hierfür die Verlaufsrichtung der Lichtlinie nicht parallel zur Verlaufsrichtung der Erhebung liegen, sondern quer dazu.

Derartige einzelne Konturlinien, also Abbilder von Lichtlinien auf dem Objekt, können - während sich das Objekt relativ und in Querrichtung zur Lichtlinie bewegt - in kurzen zeitlichen Abständen vielfach angefertigt werden, so dass durch Hintereinanderstellung dieser einzelnen Höhenschnitte, also Scans, die 3-dimensionale Oberflächengestaltung ermittelt werden kann, und/oder damit zusammenhängende Parameter wie Höhe, Volumen, Breite, Lage der Erhebungen usw.

Auch Schweißnähte oder Lötnähte zwischen aneinander angrenzenden Blechteilen im Automobilbau werden auf diese Art und Weise auf ihre Form und damit Qualität untersucht, indem vor allem unzulässige Vertiefungen in der Lötnaht vor dem Lackieren aufgefunden werden sollen.

Die Überprüfung auf Fehlstellen wird dabei in der Regel nicht nur unter einem einzigen, sondern unter zwei verschiedenen Beobachtungswinkeln durchgeführt. Darüber hinaus werden die Aufnahmen gegebenenfalls auch mehrfach hintereinander mit unterschiedlichen Lichtmengen angefertigt.

Im Folgenden wird in der Anmeldung immer beispielhaft eine Schweißnaht genannt, ohne die Erfindung auf diese Art von zu überprüfender Kontur zu beschränken.

Aus der 3-D-Abtastung, die ja mit einer gerichteten Beleuchtung, in der Regel mittels einer Laserlicht-Quelle, durchgeführt wird, ergibt sich also eine quer zu der Prüfkontur verlaufende Konturlinie, die den Querschnitt der Prüfkontur an dieser Stelle darstellt.

Dabei kann es vorkommen, dass eine solche durchgehende Konturlinie bei einer Abtastung nicht erzeugt werden kann, beispielsweise weil Teile der Kontur im Abschattungsbereich des Lichtstrahls liegen, oder wegen steilen Flanken der Kontur, beispielsweise bei Löchern in der Prüfkontur.

Unter anderem aus diesem Grund werden häufig aus zwei unterschiedlichen Betrachtungsrichtungen zwei Bilder aufgenommen, sodass die eine Blickrichtung evtl. zwar aufgrund einer Reflexion oder Abschattung keine vollständige Konturlinie ergibt, dann u.U. aber aus der anderen Blickrichtung der gleiche Bereich in der Regel gut erkennbar ist.

Ein anderer Grund, warum keine durchgehende Konturlinie bei 3-D-Abtastung erzielbar ist, können auch Reflexionen sein, wie sie beispielsweise in tiefen Löchern in der Prüfkontur auftauchen können und diese Reflexionen sind dann auch bei beiden Aufnahmen aus den unterschiedlichen Betrachtungsrichtungen vorhanden.

Ein anderes Problem können Prüfkonturen sein, die bereichsweise keine Konturform besitzen, die sich von der Umgebung abhebt, sondern die Oberfläche der Prüfkontur quasi fluchtend zur Umgebung verläuft und damit mittels 3-D-Abtastung die Ränder der Prüfkontur nicht mehr von der Umgebung unterscheidbar sind, indem die Konturlinie eben keine sichtbare auf Wölbung mehr aufweist, sondern eben verläuft.

Aus diesen Gründen ist es bereits bekannt, aus den 3-D-Aufnahmen auch ein 2-D-Bild zu erzeugen, da manchmal aus dem 2-D-Bild Informationen, z.B. die Ränder der Prüfkontur, erhalten werden können, die aus dem 3-D-Bild nicht mehr extrahierbar sind.

Dabei wird das 2-D-Bild erzeugt, indem bei der Anfertigung des 3-D-Bildes von jedem Pixel entlang der Konturlinie auf dem optischen Sensor, die ja die Querschnittslinie durch die Prüfkontur darstellt, der jeweilige Helligkeitswert entnommen wird, und die Helligkeitswerte dieser Konturlinie ein Schwarz-Weiß-Bild ergeben, sodass nach Aufsummieren der Querschnittslinien und deren Schwarz-Weiß-Bilder ein Schwarz-Weiß-Bild der gesamten Objektoberfläche erzeugt werden kann.

Für die Ermittlung der Lichtintensität, also des Helligkeitswertes, der einzelnen Pixel können entweder die realen Pixel innerhalb der Lichtlinie der 3-D-Abbildung auf dem optischen Sensor verwendet werden, oder aus den über die Breite der Lichtlinie mehreren Pixel wird z.B. mittels Schwerpunktberechnung der Helligkeitswerte über die Breite der Lichtlinie ein gemittelter Intensitätswert für z.B. ein bestimmtes gemitteltes Pixel errechnet. Dieses Pixel und der dazu errechnete gemittelte Helligkeitswert werden als Grundlage für das daraus erzeugte 2-D-Bild verwendet.

Voraussetzung ist dabei aber die Vollständigkeit des Abbildes der Lichtlinie bei der 3-D-Abtastung auf dem optischen Sensor, denn diese gibt die Pixel vor, welche in der Realität die richtige Querschnittslinie bei lotrechter Beleuchtung auf die Objektoberfläche darstellen. Falls also dieser Linienverlauf des Abbildes bei der 3-D-Abbildung nicht mehr ganz vorhanden ist, zum Beispiel aufgrund bereichsweiser Überbelichtungen aufgrund von Reflexionen, kann somit auch aus dem 3-D-Bild kein lückenloses 2-D-Bild erzeugt werden.

Aus US 2005/0162644 A1 ist die Erzeugung von 3D-Bildern sowie unter diffuser Beleuchtung erzeugten 2D-Bildern bekannt.

### Darstellung der Erfindung

### a) Technische Aufgabe

Es ist daher die Aufgabe gemäß der Erfindung, das Verfahren zur lückenlosen Abtastung einer Prüfkontur zu verbessern, und zwar bei möglichst geringem Zusatzaufwand, sowie eine entsprechende Vorrichtung hierfür zur Verfügung zu stellen.

### b) Lösung der Aufgabe

Diese Aufgabe wird durch die Merkmale der Ansprüche 1 und 11 gelöst. Vorteilhafte Ausführungsformen ergeben sich aus den abhängigen Ansprüchen.

Durch die Vorgehensweise, ein 2-D-Bild zu schaffen, welches nicht mittels gerichteter Beleuchtung, sondern mit diffuser Beleuchtung von der Oberfläche der Prüfkontur angefertigt wurde und dieses mit der 3-D-Abtastung zu vergleichen oder zusätzlich zu der mit gerichteter Beleuchtung aus dem mit 3-D-Abtastung ermittelten 2-D-Bild mit der 3-D-Abtastung zu vergleichen, steht ein anderes Bild zur - automatischen oder manuellen - Auswertung zur Verfügung, welches vor allem aufgrund der diffusen Beleuchtung sehr viel weniger oder überhaupt keine Reflexionen aufweist und insbesondere die Ränder der Prüfkontur, die Ränder von vorhandenen Vertiefungen und Löchern und ähnliches gut und scharf erkennen lässt.

Dabei kann eine solche 2-D-Aufnahme mit diffuser Beleuchtung durchaus ebenfalls Abschattungen aufweisen, zum Beispiel an scharfen Kanten oder steilen Flanken, jedoch sind diese Abschattungen dann auf dem Sensor als dunkle Bereiche gegenüber den sonst helleren Bereichen gut erkennbar und lassen genau dadurch die Ursache, also die scharfe Kante oder die steile Flanke, sehr gut erkennen.

Dadurch stehen zwei unterschiedliche Abbilder desgleichen zu überprüfenden Bereiches zur Verfügung, so dass erfindungsgemäß ein Vergleich aus beiden zur Gewinnung der gewünschten Informationen herangezogen werden kann.

So können benötigte Messdaten über Volumen, Querschnittskontur usw. der Prüfkontur aus dem 3-D-Abbild gewonnen werden, während Informationen bezüglich des Vorliegens von sehr kleinen Fehlern in der Prüfkontur in der Regel besser aus dem 2-D-Abbild gewonnen werden können. Der Vergleich der Abbilder dient der Verifizierung von potentiell aus dem Abbild ermittelten Fehlstellen, wie später erläutert wird.

Da die 2-D-Aufnahme mit der diffusen Beleuchtung mit dem gleichen optischen Strahlengang und Sensor auf der Empfängerseite durchgeführt wird wie die 3-D-Abtastung, ist die separate Betrachtung der Aufnahmen jeweils für sich und deren Auswertung möglich als auch der erfindungsgemäße automatische, rechnerische Vergleich des mit diffuser Beleuchtung ermittelten 2-D-Bildes sowohl mit den 3-D-Daten als auch mit den aus gerichteter Beleuchtung, nämlich aus den 3-D-Daten, ermittelten 2-D-Bild, mit relativ geringem Auswertungsaufwand möglich.

Damit bei der 2-D-Abbildung der zu überprüfende Bereich nicht nur im Fokus scharf abgebildet wird, sondern auch noch in einer ausreichenden Entfernung davon, also eine große Schärfenstiefe des optischen Empfängers erreicht wird, wird die Scheimpflug-Anordnung gewählt, die darin besteht, dass die Bildebene des optischen Sensors, die Hauptebene des Objektivs im Strahlengang und die Objekt-Oberfläche im Winkel zueinander liegen, sich jedoch in einer gemeinsamen Geraden schneiden.

Ein mit Zeilen und Spalten von Pixeln ausgestatteter flächiger optischer Sensor für die Aufnahme kann dabei wie eine Zeilenkamera verwendet werden, indem aus der 3-D-Aufnahme bekannt ist, welche Zeilen des optischen Sensors diejenigen sind, in denen die aufgestrahlte Laserlichtlinie liegt.

Genau dieser Bereich, also entweder diese Zeilen des optischen Sensors oder - was zum Beispiel bei CMOS-Sensoren möglich ist - genau die Pixel, in denen das 3-D-Abbild lag, wird bei der anschließenden 2-D-Aufnahme auch ausschließlich ausgelesen bzw. weiterverarbeitet, ggf. zusätzlich mit einem Sicherheitsbereich darum herum, denn nur dieser Bereich wird ja momentan benötigt und bei der 2-D-Aufnahme eventuell überhaupt scharf abgebildet werden, während die weiter abseits von dem scharfen Bereich liegende Bereiche zunehmend schnell unscharf werden.

Falls der interessierende Bereich aus der vorangehenden 3-D-Abbildung nicht bekannt ist, da die 3-D-Abbildung nicht vollständig vorhanden war, wird die in der 3-D-Abbildung vorhandene Lücke zum Beispiel anhand vorangehende 3-D-Aufnahmen interpoliert, und die 2-D-Information entlang dieses interpolierten Verlaufes der 3-D-Abbildung ausgewertet bzw. ausgelesen.

Andere Sensoren, z. B. CCD-Sensoren, können normalerweise nur zeilenweise, also in ganzen Zeilen, ausgelesen werden. Falls von den ganzen ausgelesenen Zeilen nur Teilbereiche als interessierende Bereiche, beispielsweise nur die von dem linienförmigen Abbild erzeugten, mittels der Lichtlinie betroffenen Pixel, ggf. mit einem Sicherheitsraum darum herum, ausgewählt werden, wird dies im nächsten Verarbeitungsschritt vollzogen.

Vorzugsweise werden dabei solche Abbilder mit diffuser Beleuchtung erstellt, die einander in Verlaufsrichtung der Prüfkontur lückenlos ergänzen oder gar überlappen, so dass ein durchgängiges 2-D-Bild der Prüfkontur vorhanden ist.

Gegenüber den 3-D-Abbildern bestehen nicht nur hinsichtlich der Beleuchtung Unterschiede:
Zum einen ist das linienförmige 3-D-Abbild auf dem Sensor häufig breiter als nur 1 Pixel, beispielsweise 4 oder 5 Pixel.

Diese breite Linie auf dem Sensor wird bei der Auswertung häufig reduziert auf ein Abbild mit einer Breite von nur 1 Pixel, beispielsweise indem in Querrichtung des linienförmigen Abbildes dasjenige Pixel verwendet wird, welches sich aus einer z. B. Schwerpunktsberechnung der Helligkeitswerte über die Breite der Lichtlinie auf dem Sensor ergibt. Dies reduziert die Auflösung der 3-D-Aufnahme.

Im Gegensatz dazu finden solche Verrechnungen bei dem 2-D-Abbild nicht statt, so dass dieses in der Regel eine höhere Auflösung als das 3-D-Abbild besitzt.

Des Weiteren ist die Betrachtungsrichtung, also diejenige Richtung, in der die Lichtstrahlen von der zu prüfenden Oberfläche abgestrahlt werden, und die danach den optischen Sensor erreichen, genau senkrecht zur zu prüfenden Oberfläche. Die 2-D-Aufnahme hat dabei wie bei einem ganz normalen Kamerasystem in ihrem Abbild eine Perspektiven-Verzerrung. Über eine entsprechende Kalibrierung des Sensors kann jedoch erreicht werden, dass das erzielte Bild ein quasi- telezentrisches Bild ist, welches zumindest in seinem scharfen mittleren Bereich keine Verzerrungen aufweist, also die Abbildungen des 2-D-Abbildes auf dem optischen Sensor den tatsächlichen Abmessungen auf der zu prüfenden Oberfläche entsprechen.

Dies kann man beispielsweise erreichen, indem jedem Raumpunkt ein fester Punkt Auf dem optischen Sensor zugeordnet wird. Die divergierenden Raumpunkte werden dann in ein Matrix-Bild abgebildet, bei dem die Bildpunkte äquidistant liegen, und zwar unabhängig vom Abstand des Sensors von der betrachteten Oberfläche.

Dies erleichtert nicht nur die Auswertung des 2-D-Abbildes, sondern auch das Auffinden von eventuellen Fehlstellen der Prüfkontur in der Realität, nachdem sie auf einem der Abbilder ermittelt wurden.

Die auf diese Art und Weise zeilenweise oder abschnittsweise erzeugten diffus beleuchteten 2-D-Bilder können anschließend oder in Echtzeit zu einem Gesamt-2-D-Bild mit diffuser Beleuchtung der Oberfläche der Prüfkontur zusammengesetzt werden.

Dabei kann das zweite di Bild auch ein Farbbild sein, indem die 2-D-Aufnahme dreimal hintereinander bei einer jeweils wechselnden anderen Beleuchtungs-Farbe in einer der drei Komplementärfarben erfolgt. Jede 2-D-Aufnahme besteht dann also aus drei einzelnen, unterschiedlich farbigen Aufnahmen.

Anschließend findet ein Vergleich der 2-D-Abbilder mit den 3-D-Abbildern statt, entweder pro linienförmigem Abbild oder für einen bestimmten Abschnitt der Prüfkontur. Der Vergleich wird erfindungsgemäß automatisch erfolgen, im Gegensatz zu manuell, also visuell mittels einer begutachtenden Person.

Das Ziel besteht darin, Fehler in der Prüfkontur zu finden, beispielsweise Löcher oder Fehlstellen in einer Lötnaht oder Klebenaht oder Ähnliches.

Für die einzelnen Abbilder vergleicht hierfür eine Auswerteeinheit die Abbilder mit einem Soll-Abbild und dessen vorgegebenen Grenzwerten. Liegt das ermittelte Abbild außerhalb dieser Grenzwerte, liegt bei diesem 2-D- oder 3-D-Abbild eine potentielle Fehlstelle vor.

Wird an der gleichen Stelle der Prüfkontur von beiden Abbildern eine solche potentielle Fehlstelle angezeigt, so ist diese mit fast an Sicherheit grenzender Wahrscheinlichkeit eine tatsächliche Fehlstelle.

Besonders interessant sind jedoch die potentiellen Fehlstellen, die nur von einer der beiden Arten von Abbild, also 2-D-Abbild oder 3-D-Abbild, angezeigt werden, denn hier kann es sich entweder um eine tatsächliche Fehlstelle handeln oder auch um einen Abbildungsfehler:
Wenn eine potentielle Fehlstelle in einem 3-D-Abbild zu sehen ist, im 2-D-Abbild jedoch nicht sichtbar ist, ist es häufig in Wirklichkeit keine Fehlstelle, sondern ein durch Reflexionen oder Ähnliches bewirkter Abbildungsfehler bei dem 3-D-Abbild.

Umgekehrt ist eine potentielle Fehlstelle, die in dem 2-D-Abbild angezeigt wird, im 3-D-Abbild dagegen nicht angezeigt wird, häufig eine tatsächliche Fehlstelle, entweder weil sie aufgrund der höheren Auflösung im 2-D-Abbild nur bei diesem zu erkennen ist und sehr klein ist, oder weil sie aufgrund von Abschattungen oder Reflexionen und punktueller Überbelichtungen bei dem 3-D-Abbild nicht zu erkennen ist.

Obwohl hierbei die 2-D-Abbilder das zuverlässigere Erkennungsmittel für tatsächliche Fehler in der Prüfkontur sind, ist die Kombination mit den 3-D-Abbildern und deren Vergleich sinnvoll und notwendig, da beispielsweise nur damit Vermessungen der Prüfkontur vorgenommen werden können.

Der Vergleich mit den aus der 3-D-Abtastung erhaltenen Daten erfolgt ebenfalls entweder sofort nach jedem Paar von 3-D- und 2-D-Aufnahme, oder erst nach Abtastung eines bestimmten Bereiches oder gar der gesamten Prüfkontur, wobei letzteres den größten Aufwand für das Zwischenspeichern von 2-D- und 3-D-Daten nach sich zieht und deshalb bevorzugt der Vergleich früher, entweder zeilenweise oder nach einem bestimmten Abschnitt der Prüfkontur, durchgeführt wird.

Dabei ist gegebenenfalls auch der Versatz zwischen 2-D-Aufnahme und 3-D-Aufnahme in Verlaufsrichtung der Prüfkontur, der durch das in der Regel ununterbrochene Weiterfahren des Prüfkopfes entlang der Prüfkontur besteht, zu berücksichtigen, falls er relevant ist, und rechnerisch vor dem Vergleich zu eliminieren.

Dies ist deshalb möglich, da zumindest eine der beiden Aufnahmearten, also 3-D-Aufnahmen oder 2-D-Aufnahmen oder beide, in so kurzen Abständen durchgeführt werden, dass sie sich überlappen oder zumindest lückenlos aneinander anschließen und daraus eine in Verlaufsrichtung der Prüfkontur durchgängige Aufnahme hergestellt werden kann.

Der Versatz zwischen unmittelbar auf einander folgende 2-D-Aufnahme und 3-D-Auffnahme kann also eliminiert werden, in dem z. B. bei einer zuerst durchgeführten 3-D-Aufnahme und danach durchgeführten 2-D-Aufnahme nicht die konkret danach durchgeführte 2-D-Aufnahme als Vergleichsbild hergenommen wird, sondern aus dem durchgängig vorhandenen 2-D-Abbild das Abbild von derjenigen Prüfposition, die dem vorher angefertigten 3-D-Abbild entspricht.

Häufig ist jedoch auch der Versatz zwischen 2-D Aufnahme und 3-D-Aufnahme in Verlaufsrichtung der Prüfkontur so gering, dass seine Berücksichtigung unterbleiben kann:
Wenn beispielsweise die Geschwindigkeit des Prüfkopfes in Verlaufsrichtung 100 mm/s beträgt, und im Abstand von jeweils 0,1 mm eine 3-D-Aufnahme angefertigt werden soll, muss mit einer Aufnahmefrequenz von 1 kHz gearbeitet werden.

Wenn dazwischen jeweils eine 2-D-Aufnahme angefertigt werden soll, beträgt der Versatz der 2-D Aufnahme zur vorangehenden 3-D-Aufnahme nur 0,05 mm, und dies ist vernachlässigbar. Der Prüfkopf muss dann jedoch in der Lage sein, mit der doppelten Frequenz, also 2 kHz, abzutasten.

Einer der Gründe für die kombinierte 3-D- und 2-D-Abtastung besteht darin, dass bei den 2-D-Aufnahmen wegen der dort benutzten diffusen Beleuchtung punktuelle Überbelichtungen durch Reflexionen und Ähnliches weniger selten bzw. überhaupt nicht auftauchen. Dennoch kann es auch bei diesen diffus beleuchteten 2-D-Aufnahmen zu Überbelichtungen oder Unterbelichtungen kommen, was ja stark von den Reflexionseigenschaften der zu prüfenden Oberfläche abhängt, die nie den erwarteten Sollvorgaben vollständig entspricht.

Vorzugsweise werden aus diesem Grund von vornherein mehrere Abbilder mit unterschiedlichen Beleuchtungsstärken bei der 2-D-Überprüfung erstellt und hiervon nur das qualitativ beste Abbild verwendet, was ebenfalls automatisch ermittelt werden kann.

Dann werden entweder die mit einer übereinstimmenden Beleuchtungsstärke angefertigten zweidimensionalen Abbilder zu einem Gesamt-Abbild zusammengefügt, und müssen dieses Gesamtabbild ebenfalls ohne Lücken zwischen den Einzelaufnahmen ergeben, oder von jeder 2-D-Aufnahme, die für annähernd die gleiche Prüfposition mit unterschiedlichen Belichtungen durchgeführt werden, wird nur die jeweils Beste benutzt, und diese, also mit unterschiedlichen Beleuchtungsstärken erzielten Abbilder zu einem lückenlosen Gesamt-Abbild in Verlaufsrichtung der Kontur zusammengesetzt.

In diesem Fall müssen die einzelnen Abbilder, da sie mit unterschiedlicher Beleuchtungsstärke erzielt wurden, vor einer Auswertung durch Rückrechnung auf eine theoretische gemeinsame Beleuchtungsstärke normiert werden, um Fehlstellen innerhalb des Verlaufs der Prüfkontur feststellen zu können.

Die hierfür zur Verfügung stehenden automatischen Verfahren sind bekannt.

Dabei können bereits vor dem Erstellen des zweidimensionalen Abbildes Ober- und Untergrenzen für die Lichtintensität einzelner Pixel auf dem optischen Sensor vorgegeben werden, deren Über- bzw. Unterschreitung dann eine Veränderung der Beleuchtungsstärke für die nachfolgenden 2-D-Aufnahmen bewirkt, also entweder durch verändernde Belichtungszeit oder der Leistung der diffusen Lichtquelle oder eine Kombination von beiden, bis die Intensität der einzelnen beleuchteten Pixel auf dem optischen Sensor innerhalb des Sollbereichs liegt.

Hinsichtlich der Vorrichtung, die zur Durchführung dieses Verfahrens benötigt wird, genügt im einfachsten Fall ein optischer Prüfkopf, wie er für die 3-D-Abtastung ohnehin benötigt wird, also mit einer gerichteten Lichtquelle wie etwa einem Laser und einem optischen Sensor sowie mit wenigstens einer, vorzugsweise mehreren gleichzeitig aktivierbaren Lichtquellen für die diffuse Beleuchtung des Prüfobjektes, am besten nahe um die gerichtete Lichtquelle, herum und/mit einer Abstrahlung in einer Abstrahl-Hauptebene , die möglichst senkrecht zur Objekt-Oberfläche liegt.

Dabei sollten die Lichtkegel der näheren diffusen Lichtquellen so ausgerichtet sein, dass der gewünschte Beobachtungsbereich auf der Prüfoberfläche möglichst von allen Lichtkegel im gleichzeitig und/oder vollständig beleuchtet wird.

Vorzugsweise wird insbesondere für die 3-D-Abtastung die Scheimpfluganordnung gewählt. Allerdings ist hierbei die Objektebene die Bestrahlungsebene mit dem fächerförmigen Laserlichtstrahl, da nur diese einzige Objektebene bei der 3-D-Abtastung interessiert. Wenn für die 2-D-Abtastung der gleiche Sensor benutzt wird, sollte vorzugsweise auch die gleiche Beleuchtungsrichtung gewählt werden, so dass auch dort dann die Anordnung nach Scheimpflug erfüllt ist.

Zusätzlich ist eine Auswerteeinheit notwendig, die in der Lage ist, das mittels der diffusen Beleuchtung erhaltene 2-D-Bild auszuwerten und erfindungsgemäß mit den aus der 3-D-Abtastung erhaltenen Daten zu vergleichen und beide Datensätze miteinander zu verknüpfen, sodass auch ein optimales Ergebnis erzielbar wird, indem Datenlücken, die bei der 3-D-Abtastung auftreten, mit Hilfe der Daten aus dem 2-D-Bild ergänzt und geschlossen werden können.

Für die 2-D-Aufnahme kann natürlich auch ein separater optischer Sensor verwendet werden, und dieser muss dann auch nicht unbedingt im Rahmen einer Scheimflug-Anordnung ausgerichtet sein, jedoch muss dann einerseits die exakte Relativlage des zweiten optischen Sensors zum ersten optischen Sensor bekannt sein, und die Auswerteeinheit den Versatz der beiden optischen Sensoren zueinander bei der Auswertung berücksichtigen, was zum Teil in Echtzeit geschehen muss, um bei der nur zeilenweise Auslesung eines optischen flächigen zweiten Sensors die richtige Zeile mit Hilfe der 3-D-Daten bestimmen zu können, die aus dem zweiten optischen Sensor ausgelesen werden soll.

### c) Ausführungsbeispiele

Ausführungsformen gemäß der Erfindung sind im Folgenden beispielhaft näher beschrieben. Es zeigen:
- Fig. 1a-c:: einen Prüfkopf mit einer aufgewölbten Prüfkontur,
- Fig. 2a, b:: das entsprechende Abbild der Lichtlinie bei der 3-D-Überprüfung,
- Fig. 3a:: einen Prüfkopf mit einer im Wesentlichen flachen Prüfkontur,
- Fig. 3b:: das dadurch bewirkte linienförmige Abbild der Lichtlinie bei der 3-D-Überprüfung,
- Fig. 4a, b:: eine Gegenüberstellung von 3-D Abbild und 2-D Abbild bei auf-gewölbter Prüfkontur,
- Fig. 5a, b:: eine Gegenüberstellung von 3-D Abbild und 2-D Abbild bei fla-cher Prüfkontur,
- Fig. 6a:: eine Prinzipdarstellung des Strahlenganges,
- Fig. 6b:: die Beleuchtungs-Situation bei diffuser Beleuchtung.

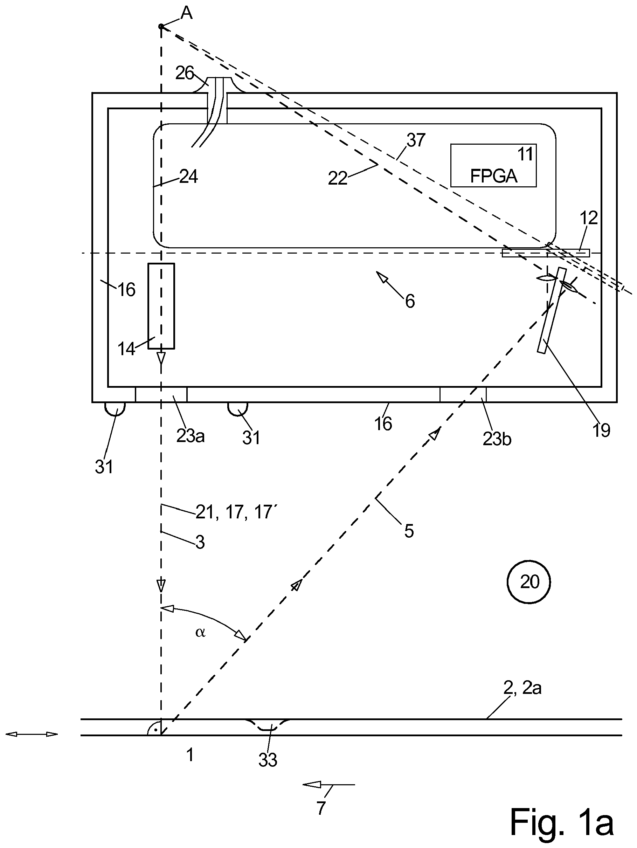

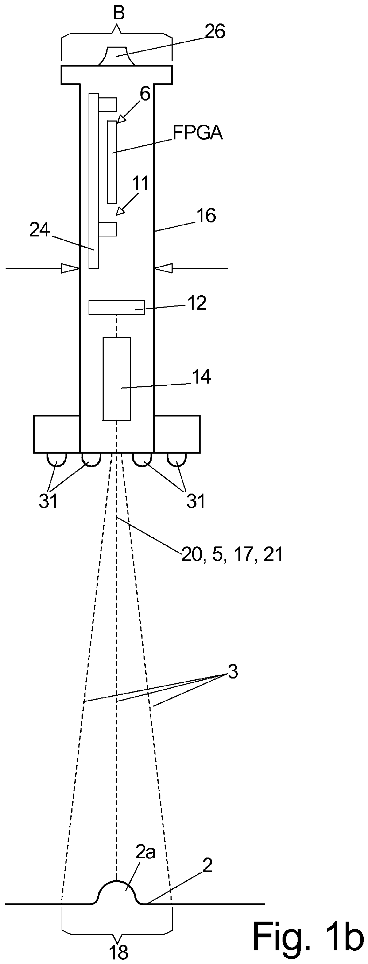

**Figur 1a** zeigt einen Prüfkopf 6 in der Seitenansicht, die auch erkennen lässt, wie das bekannte Lichtschnitt-Triangulationsverfahren prinzipiell funktioniert:
Dabei wird für die 3-D-Überprüfung ein fächerförmiger Lichtstrahl 3, in der Regel ein Laser-Lichtstrahl, auf die Oberfläche 2 eines Objektes 1 gerichtet - quer zur Erhebung 2a verlaufend, wie am besten in **Figur 1b** erkennbar - und erzeugt dort eine Lichtlinie. Die von der Oberfläche 2 des Objektes 1 reflektierte Lichtlinie wird von dem Prüfkopf 6 als Abbild 4 aufgenommen, die aus z. B. einem flächigem, optischen Sensor 12 sowie einer damit verbundenen elektronischen Verarbeitungseinheit 11 zum Verarbeiten der vom Sensor 12 aufgenommenen Bilddaten und Berechnen der Ergebnisdaten.

Damit sich auf dem optischen Sensor 12 ein Abbild 4 der Lichtlinie abzeichnet, welches Rückschlüsse auf die tatsächliche Kontur 2' der Oberfläche 2 an dieser Stelle zulässt, dürfen die Abstrahlrichtung 17 des Lichtstrahls 3 und die Blickrichtung 5 des Prüfkopfes 6 nicht zusammenfallen, sondern müssen sich durch einen Triangulationswinkel α unterscheiden. Vorliegend sind diese beiden Richtungen so gewählt, dass die Abstrahlrichtung 17 der Laserlichtquelle 14 senkrecht zur Oberfläche 2 steht.

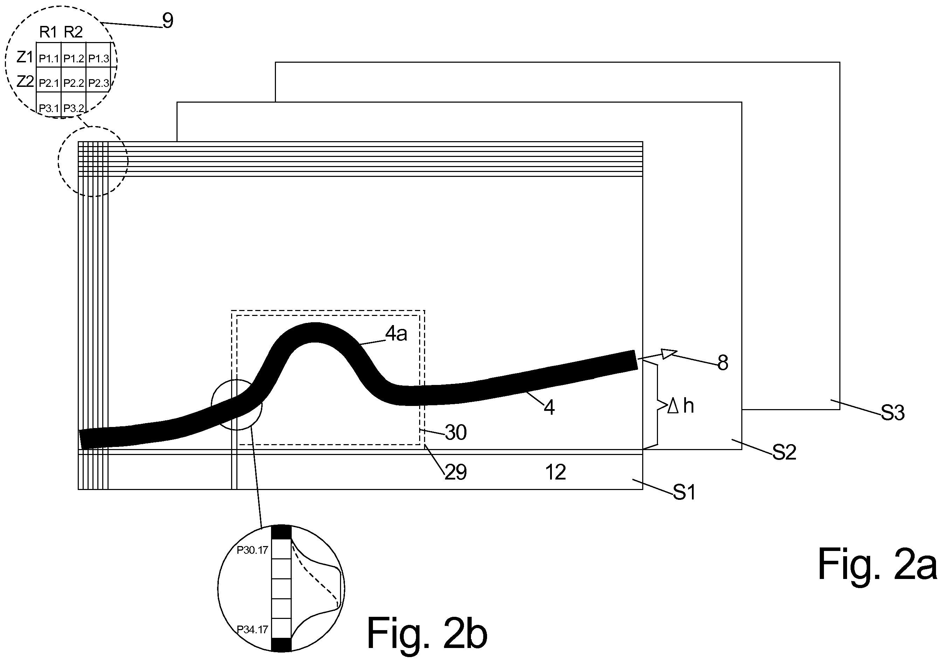

Eine Unebenheit, beispielsweise eine Erhebung 2a, auf der Oberfläche 2 im Auftreffbereich des Lichtstrahles 3, wird als Abbild 4 auf der Oberfläche 2 und damit auch auf dem Sensor 12 keine gerade Linie, sondern eine Linie mit einer Aufwölbung 4a darin ergeben, wie beispielsweise in **Figur 2a** dargestellt, wobei diese Aufwölbung 4a des Abbildes 4 sich abhängig von dem Triangulationswinkel α von der Form der Aufwölbung 2a geschnitten entlang der Lotrechten 21 unterscheidet. Wegen des bekannten Winkels α sowie der Fokussierung auf die Oberfläche 2 und/oder der Bekanntheit des Abstandes des Prüfkopfes 6 von der Oberfläche 2 kann aus den Abmessungen des Abbildes 4 auf die tatsächlichen Abmessungen der Aufwölbung 2a auf der Oberfläche 2 rechnerisch geschlossen werden.

Wie **Figur 1a, b** zeigen, sind nicht nur die erwähnten Komponenten des Prüfkopfes 6, sondern auch die Lichtquelle 14 zur Erzeugung des ausgesandten Laser-Lichtstrahles 3 gemeinsam innerhalb des Gehäuses 16 des Prüfkopfes untergebracht, wobei dieses Gehäuse plattenförmig flach ist mit einer Hauptebene parallel zu der durch Abstrahlrichtung 17 und Blickrichtung 5 aufgespannte Arbeitsebene und einer Breite B quer zu dieser Hauptebene 20, die nicht größer ist als die Beobachtungsbreite 18 des fächerförmigen Lichtstrahles 3, mit der dieser auf der Oberfläche 2 auftrifft.

Wie Figur 1a zeigt, ist der Prüfkopf auch von den Abmessungen in der Hauptebene 20 sehr kompakt aufgebaut, was dadurch erreicht wird, dass die Lichtquelle 14, in der Regel eine Laserpatrone, nahe des für den Lichtstrahl 3 vorgesehenen Durchlasses 23a im Gehäuse 16 angeordnet ist und der optische Sensor 12 nahe des anderen Durchlasses 23b - in oder nahe dem sich in der Regel eine Linse oder ein ganzes Objektiv im Strahlengang befindet -, die sich beide in einer der Schmalseiten des Gehäuses befinden, wobei zwischen diesem Durchlass 23b und dem optischen Sensor 12 eine Umlenkung des eintreffenden Lichtstrahls, also der Blickrichtung 5, über einen Spiegel 19 in eine Richtung parallel zu der Außenkante, in der sich die Durchlässe 23a, b befinden, erfolgt.

Sowohl der Sensor 12 als auch der Spiegel 19 sind dabei an einem Detektor-Basiskörper 6a befestigt, der seinerseits am Gehäuse 16 der Einheit fixiert ist.

Dadurch verbleibt auf der von der Außenseite mit den Durchlässen 23a, b abgewandten Hälfte des Gehäuses ausreichend viel Platz, um dort eine in der Hauptebene 20 des Gehäuses liegende Platine 24 anzuordnen, die die gesamte elektronische Verarbeitungseinheit 11 enthält und mit dem Sensor 12 über elektrische Leitungen ebenso in Verbindung steht wie mit der Lichtquelle 14. Die von der Verarbeitungseinheit 11 ermittelten Ergebnisdaten werden über einen Stecker 26 ausgegeben.

Die nach dem Lichtschnittverfahren hergestellten Einzelaufnahmen werden in zeitlich schneller Abfolge wiederholt, um die sich in Bewegungsrichtung 7 relativ zum Prüfkopf bewegende Oberfläche 2 des Objektes 1 ständig zu beobachten. Da dies z. B. an einer Produktionsmaschine für das Objekt 1 oder die Erhebung 2a auf der Basisfläche 2, beispielsweise eine Kleberraupe auf einem Karton als Basisfläche 22, durchgängig geschehen soll, ist es notwendig, dass die Berechnung der Ergebnisdaten zeitaktuell geschieht, also von der Verarbeitungseinheit die Ergebnisdaten genauso schnell, also im gleichen Rhythmus, geliefert werden müssen, wie die einzelnen Aufnahmen von dem Sensor 12 angefertigt werden.

Mittels des Prüfkopfes 6 sollten in der Regel nicht zufällige Konturgestaltungen untersucht werden, sondern es werden bestimmte Konturen erwartet, wie im Beispielsfall der **Figuren 2a, b** eine Aufwölbung 4a in einem ansonsten im Wesentlichen linienförmig geraden Abbild 4 in Form einer Lichtlinie bzw. eines Lichtbandes, die die aufgewühlte Prüfkontur 2 repräsentiert.

Dabei müssen häufig die Abmessungen dieser Aufwölbung 4a ermittelt werden und daraus die tatsächlichen Abmessungen der Erhebung 2a, also des Querschnittes der Prüfkontur 2 aus der Basisfläche 22 berechnet werden.

Dabei soll auch erkannt werden, falls die Prüfkontur 2 eine Fehlstelle 33 zum Beispiel in Form einer unerwünschten Vertiefung in der ansonsten gleichmäßig aufgewölbten Prüfkontur 2 aufweist. Sofern die Formabweichung des Querschnitts der Prüfkontur 2 an der Fehlstelle 33 groß genug ist, wird diese als entsprechende Forderung des Abbildes vier auf dem Sensor zwei sichtbar sein und kann dort erkannt werden.

In **Figur 2a** ist ein solches Abbild 4 - erzeugt an einer Position abseits der Fehlstelle 33 - auf der Oberfläche des optischen Sensors 12 dargestellt.

Das Abbild 4 besteht darin, dass dort, wo die reflektierte Lichtlinie auf der Fläche des Sensors 12 auftrifft, die entsprechenden rasterartig in Reihen R1, R2.. und Zeilen Z1, Z2.. angeordneten Pixel P1.1, P1.2.. P2.1. P2.2.. des Sensors 12 stärker beleuchtet sind, also einen höheren Helligkeitswert aufweisen, als diejenigen Pixel, auf denen das Abbild, also der vom Objekt 1 reflektierte Lichtstrahl 3, nicht auftrifft. In der zeichnerischen Schwarz-weiß Darstellung ist dies invers dargestellt, nämlich das linienförmige Abbild dunkel dargestellt.

Die Pixel innerhalb des Abbildes 4 weisen dabei auch unterschiedliche Helligkeitswerte auf, in der Regel am Rand des bandförmigen Abbildes mit einem geringeren und in der Mitte mit einem höheren Helligkeitswert, was jedoch nicht immer der Fall ist und vom Reflektionsverhalten der Oberfläche zwei im Beobachtungsbereich abhängt.

Eine Reduzierungsmethode liegt in der Datenreduzierung durch rechnerisches Reduzieren des an sich über mehrere Pixel breiten Lichtbandes des Abbildes 4, z. B. wiederum nur im interessierenden Bereich 30, auf die Breite nur eines Pixels.

So besitzt das Abbild 4 in Form einer Lichtlinie beispielsweise in Reihe 17 eine Breite von fünf Pixeln, indem in dieser Reihe die Pixel P30.17 bis einschließlich P34.17 einen erhöhten Helligkeitswert aufweisen.

Da primär der Verlauf des bandförmigen Abbildes 4 und nicht deren Breite interessiert, ist es bei dieser 3-D-Überprüfung ausreichend, den Verlauf des Abbildes 4 auf eine in Erstreckungsrichtung 8 des Bandes hintereinander liegende Abfolge von einzelnen Pixeln, den so genannten Profilpunkten, also auf eine Linie mit einer Breite von einem Pixel, zu reduzieren.

Dies kann auf mehrere Arten geschehen, z. B. indem an jeder Längsposition entlang der Erstreckungsrichtung 8 des Abbildes 4, also in diesem Fall in jeder Reihe, von den Pixeln mit erhöhtem Helligkeitswert dasjenige mit dem höchsten Helligkeitswert als relevantes Pixel gewählt wird, oder dasjenige Pixel in der Mitte der beleuchteten Pixel, in diesem Fall P32.17 aus P30.17 bis P34.17.

Da die Helligkeitsverteilung quer über das bandförmige Abbild 4 nicht immer gleichmäßig, z. B. nicht unbedingt gaußförmig, sein muss, kann eine Gewichtung hinsichtlich des Helligkeitswertes erfolgen und deshalb kann auch der Schwerpunkt der über der Breite b des Abbildes 4 aufgetragenen Helligkeitswerte bestimmt und als Profilpunkte verwendet werden.

Dadurch wird das bandförmige Abbild 4 reduziert auf eine Abfolge einzelner Profilpunkte in Erstreckungsrichtung 8 des Abbildes 4 hintereinander.

Da in aller Regel die Prüfkontur 2 in ihrer ganzen Länge abgetastet und vermessen werden soll, werden während der Relativbewegung des Prüfkopfes sechs entlang der Prüfkontur 2 hintereinander eine Vielzahl solcher Aufnahmen, also Abbilder 4, die so genannten einzelnen Scans S1, S2, S3 usw. erzeugt und ausgewertet.

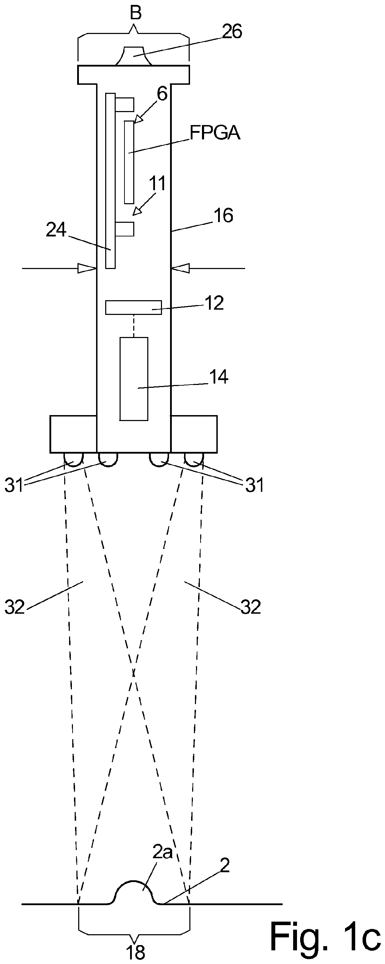

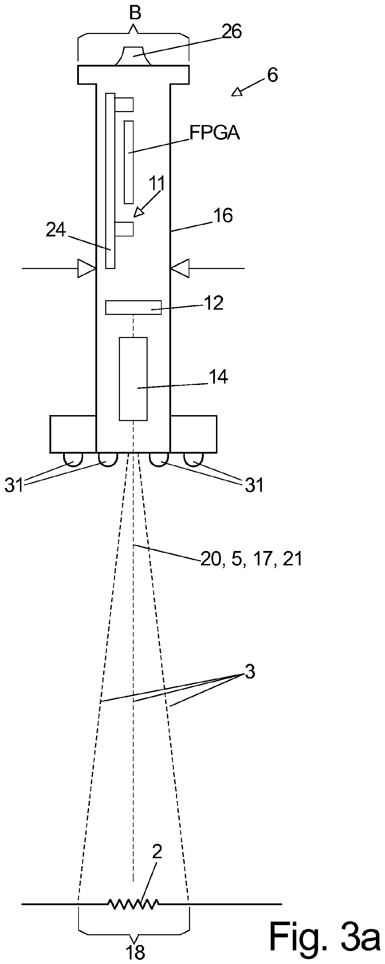

**Figur 3a** zeigt die Situation ähnlich der Figur 1 b, also mit dem gleichen Prüfkopf 6, jedoch stellt die Prüfkontur 2 gegenüber der Umgebung keine Erhebung mehr dar, sondern liegt in deren Ebene, und unterscheidet sich lediglich von der Umgebung durch ihr anderes Reflektionsverhalten, was durch eine andere Materialbeschaffenheit an der Oberfläche bedingt sein kann oder durch eine mikroskopisch andere Struktur durch viele in unterschiedliche Richtungen gerichtete, mikroskopisch kleine Facetten oder Ähnliches, wie durch die kleine Welligkeit im Bereich der Prüfkontur 2 in Figur 3a angedeutet.

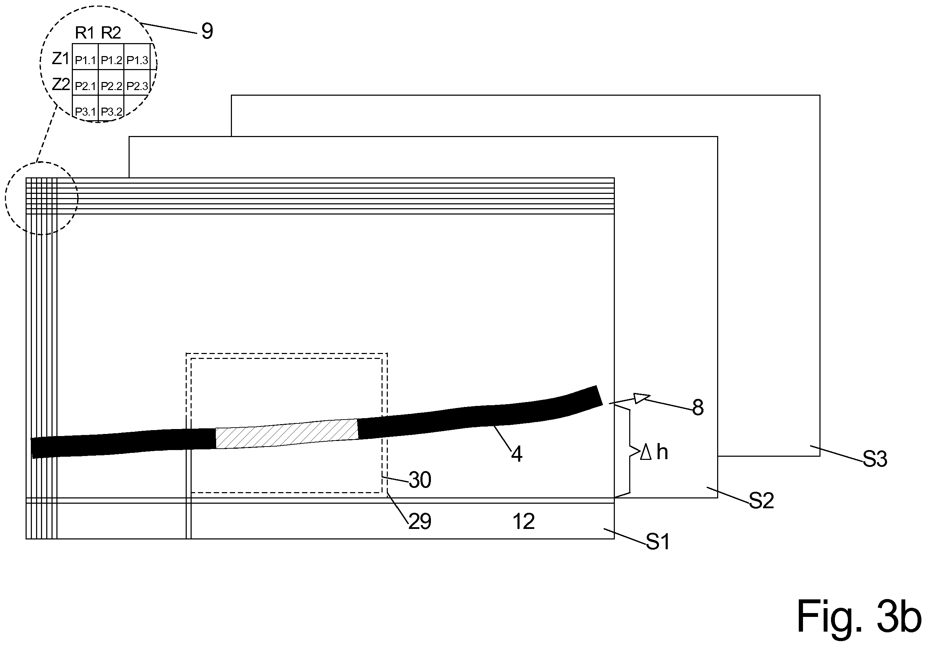

Dementsprechend ergibt dies - wie in **Figur 3b** dargestellt - ein Abbild 4 einer Lichtlinie, welche nicht mehr hutförmig ist, sondern im Wesentlichen eine gerade Linie, die jedoch in dem Bereich der Prüfkontur 2, also im interessierenden Bereich 30, heller ist als abseits davon, wobei die größere Helligkeit hier durch schraffierte Bereiche in dem Abbild 4 dargestellt ist.

Es kann jedoch auch Fehlstellen 33 in der Prüfkontur 2 geben, die so klein sind, dass sie in dem bandförmigen Abbild 4 gemäß Figur 2a oder gemäß Figur 3b nicht erkennbar sind, beispielsweise weil ihre Größe geringer ist als die in Figur 2b dargestellte Breite des bandförmigen Abbildes 4.

Ein anderes Problem sind Fehlstellen, die zwar groß genug sind, um durch die 3-D-Überprüfung erfasst zu werden, die jedoch aufgrund der Form der Fehlstelle so starke Reflexionen auslösen, dass an dieser Stelle kein durchgehendes bandförmiges Abbild 4 erhalten werden kann, welches bei der Auswertung diese Fehlstelle dann erkennen lässt.

Um auch solche Fehlstellen zu ermitteln, wird zusätzlich zur 3-D-Überprüfung eine 2-D-Überprüfung mittels diffuser Beleuchtung durchgeführt, was das Auftreten von Reflexionen wie bei einer einzigen, stark gerichteten Lichtquelle vermeidet.

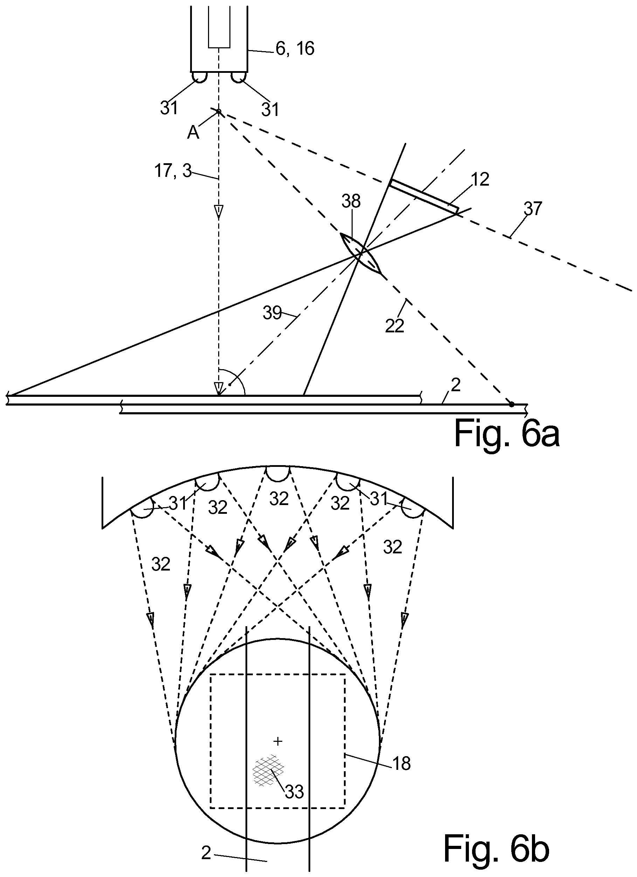

Zu diesem Zweck sind - wie in den **Figuren 1a** bis **c** sowie **3a** dargestellt - an der der Prüfkontur 2 zugewandten Außenseite des Gehäuses 16 des Prüfkopfes 6 mehrere Lichtquellen 31, in der Regel Leuchtdioden, angeordnet, die den Beobachtungsbereich 18 beleuchten, und zwar so, dass der Beobachtungsbereich 18, wie er z.B. in **Figur 3a** und in **Figur 6b** dargestellt ist, von allen diffusen Lichtquellen 31 gleichzeitig bestrahlt wird, um eine optimal diffuse Beleuchtung zu erzielen, wie in der Frontansicht der Figur 1c dargestellt und auch in der Aufsicht der Figur 6b:
Dort ist erkennbar, dass der Beobachtungsbereich 18 innerhalb aller Lichtkegel sämtlicher vorhandener diffuser Lichtquellen 31 liegt, die zu diesem Zweck - abhängig von ihrem Abstrahlwinkel und anderen optischen Parametern - entsprechend angeordnet werden müssen.

Dies wird beispielsweise erreicht, indem in der Seitenansicht der Figur 1a betrachtet sowohl vor als auch hinter dem Eintrittsfenster 23b solche Lichtquellen 31 angeordnet sind, und dabei jeweils in einer Reihe quer zur Fortschrittsrichtung der Prüfkontur 2 verlaufend, wie in Figur 1b und 1c dargestellt. Zu diesem Zweck kann die entsprechende Seite des Gehäuses 16 auch verbreitert sein, um Lichtquellen 31 in ausreichender Anzahl und mit ausreichendem Querabstand und evtl. in einem Bogen um den Beobachtungsbereich 18 herum, zueinander anzuordnen.

Mit dem Prüfkopf 6 wird somit in der Regel während der Vorwärtsbewegung entlang der Prüfkontur 2 eine Laserlichtlinie aufgestrahlt - wie in Figur 1b dargestellt - und ein Abbild 4 erzeugt, wie in Figur 2a oder 3b dargestellt und der Beobachtungsbereich diffus beleuchtet - wie in Figur 1c dargestellt - und bei dieser Beleuchtung eine 2-D-Schwarz-/Weiß-Aufnahme in Form des Abbildes 104 erzeugt.

Eine gleichzeitige Beleuchtung mit gerichtetem Licht, insbesondere Laserlicht, und diffusem Licht ist zu vermeiden.

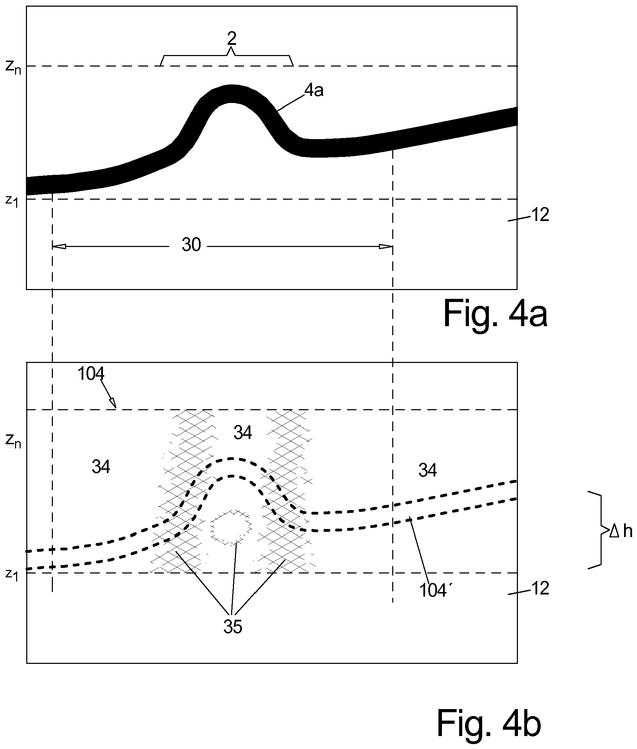

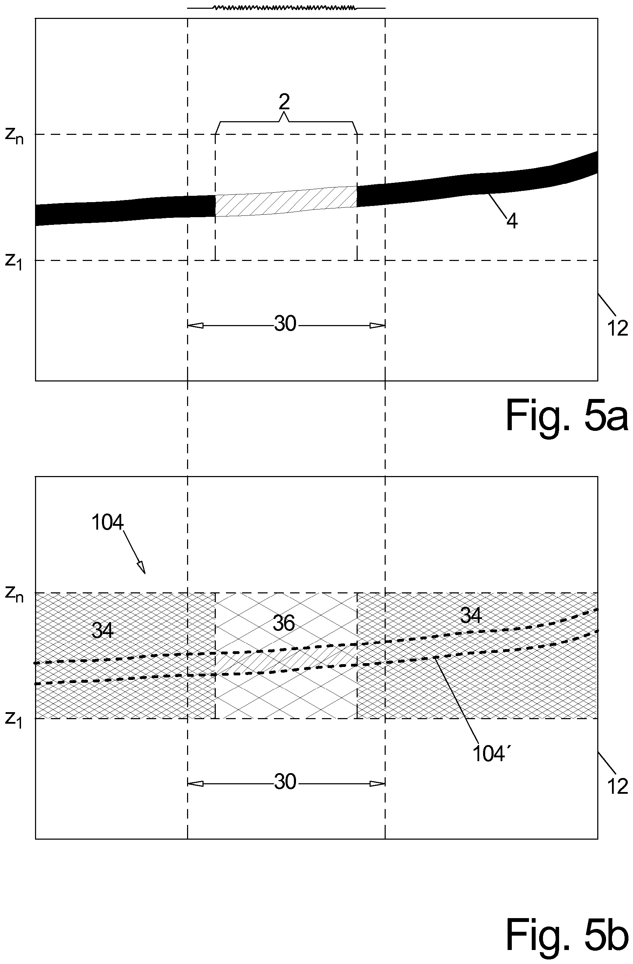

Die **Figuren 4a,b** und **5a,b** zeigen jeweils Gegenüberstellungen der Abbilder 4 aus der dreidimensionalen Überprüfung und der Abbilder 104 aus der zweidimensionalen Überprüfung an der gleichen Stelle der Prüfkontur.

Dabei wird in aller Regel für das Erstellen und Auswerten der 2-D-Aufnahme, also des Abbildes 104, das zuvor erzeugte Abbild 4 mit gerichteter Beleuchtung herangezogen, wie am Beispiel der Figuren 4a und b erläutert werden kann:
Aus der Lage des Abbildes 4 aus der dreidimensionalen Überprüfung auf dem optischen Sensor 12 ist bekannt, welche Zeilen Z1 bis ZN des Sensors 12 von diesem Abbild 4 betroffen waren.

Bei der anschließenden Aufnahme des Abbildes 104 bei diffuser Beleuchtung werden dementsprechend nur die gleichen Zeilen Z1 bis ZN des Sensors 12 ausgelesen, um den gleichen Bereich der Prüfkontur abzubilden, es sei denn, dass sich der Prüfkopf inzwischen weiterbewegt hat, dann müssen in diesen Weg versetzte Zeilen ausgelesen werden. Zusätzlich kann auch in der anderen Richtung, der Spaltenrichtung, nur ein gewünschter interessierender Bereich 30, beispielsweise die Beobachtungsbreite 18 aus Figur 1b, ausgewertet werden, da man aus dem dreidimensionalen Abbild 4 weiß, dass die Prüfkontur 2 in diesem Bereich liegt.

Figur 4b zeigt das sich ergebende Abbild 104 bei diffuser Beleuchtung:
In den Bereichen, in denen die Prüfkontur 2 im Wesentlichen eben verläuft, also beidseits des Breitenbereiches, in dem sich die Aufwölbung 4a des Abbildes 4 befunden hat, wird viel Licht auf dem Sensor 12 auftreffen, und diese Bereiche werden als helle Bereiche 34 dargestellt. Gleiches gilt für den höchsten Bereich der Aufwölbung 4a, denn dort ist die Prüfkontur 2 ebenfalls annähernd eben.

In den Flankenbereichen der aufgewölbten Prüfkontur 2 wird dagegen ein Teil des Lichtes nicht in Richtung Sensor 12 abgestrahlt, sodass diese Bereiche dunkler, beispielsweise als graue Bereiche 35, erscheinen.

Die hellen Bereiche 34 und grauen Bereiche 35 verlaufen in Verlaufsrichtung der Prüfkontur 2, also auf dem Sensor 12 der Figur 4b beispielsweise vertikal innerhalb des ausgelesenen Zeilenbereiches Z1 bis ZN.

Falls sich nun in der Prüfkontur 2 an dieser überprüften Stelle eine beispielsweise sehr kleine Fehlstelle 33 in Form einer Vertiefung befindet, ist auch diese gut zu erkennen, denn auch deren Flanken werden dunkler auf dem Sensor dargestellt als ebene Bereiche der zu überprüfenden Oberfläche.

Wegen der diffusen Beleuchtung wird eine solche Fehlstelle bei der 2-D-Überprüfung in aller Regel ohne Probleme erkennbar sein, und selbst wenn sie so klein ist wie nur ein oder wenige Pixel auf dem optischen Sensor 12, wird dies am Helligkeitsunterschied der betreffenden Pixel erkennbar sein, auch wenn es in der Kontur des Abbildes 4 bei der 3-D-Überprüfung gemäß Figur 4a noch keine Konturveränderung bewirkt.

In den **Figuren 5a** und **b** ist die gleiche Gegenüberstellung bei einer im Wesentlichen flachen Prüfkontur dargestellt, die bei der 3-D-Überprüfung ein im Wesentlichen flaches Abbild 4 bewirkt, das im Bereich der Prüfkontur 2 sich in der Regel nur so gering hinsichtlich der Helligkeitswerte von den Bereichen abseits der Prüfkontur 2 unterscheidet, dass eine 3-D-Überprüfung nicht immer erfolgreich ist.

In diesen Fällen besitzt die Prüfkontur 2 jedoch in aller Regel zwar makroskopisch keine Aufwölbung, aber mikroskopisch eine andere Oberflächenstruktur, z.B. eine Vielzahl mikroskopisch kleiner Aufwölbungen oder Facettierungen, und dies führt in der Schwarz-/Weiß-Aufnahme bei der 2-D-Überprüfung zu einem Abbild 104, bei dem der z.B. facettierte Bereich der Prüfkontur 2 auf dem Sensor als strukturierter, z.B. fleckiger, Bereich 36 erscheint, während die Bereiche abseits der Prüfkontur 2 als helle Bereiche 34 erscheinen.

Damit können aus dem Abbild 104 zum einen der Verlauf und die Ränder der Prüfkontur 2 gut erkannt werden und auch darin im Beobachtungsbereich enthaltene Fehlstellen mit sehr hoher Auflösung dargestellt und erkannt werden.

Damit vor allem bei der 2-D-Überprüfung das Abbild 104 zumindest im gesamten interessierenden Bereich 30, als scharfes Bild erzielt werden kann, wird erfindungsgemäß zumindest für die 2-D-Abtastung, vorzugsweise auch für die 3-D-Abtastung, eine Abwandlung der so genannten. Scheimpflug-Anordnung gewählt, deren prinzipielle Anordnung des Strahlenganges in **Figur 6a** dargestellt ist:
Denn häufig liegt das Problem vor, dass die Bildebene 37, also die Ebene, in welcher der optische Sensor 12 liegt, nicht parallel, sondern im Winkel zur Objektebene liegt.

Zwischen beiden ist in der Regel ein Objektiv, beispielsweise eine Sammellinse 38, angeordnet. Durch die Winkellage von Bildebene 37 und Objektebene wird jedoch nur die Mitte des Beobachtungsbereiches, also lediglich der Bereich um den Zentralstrahl 39 herum, scharf auf dem optischen Sensor 12 abgebildet, während abseits davon zunehmend Unschärfe auftritt.

Um dies zu vermeiden, ist es aus der Scheimpflug-Anordnung bekannt, Bildebene 37, Objektebene und Linsenebene 22 so anzuordnen, dass sie sich in einer gemeinsamen Geraden A schneiden, wodurch eine scharfe Abbildung im gesamten Abbildungsbereich auf dem Sensor 12 erreicht wird.

Bei der 3-D-Abtastung interessiert jedoch nur die Abstrahlrichtung 17 und die darin liegende Lichtlinie auf der Oberfläche des zu prüfenden Objektes, , nicht die abseits davon liegenden Bereiche, weshalb in diesem Fall die Beleuchtungsebene 17 die Objektebene ist.

Wenn bei der 2-D-Abtastung die diffusen Lichtquellen 31 nahe am Strahlengang des fächerförmigen Laserstrahles positioniert sind, gilt das gleiche für die 2-D-Abtastung.

Wie **Figur 1a** zeigt, wird dies in der Praxis erreicht, indem der von der LaserLichtquelle 14 abgegebene Laserstrahl lotrecht auf die Oberfläche 2 des zu prüfenden Objekts 1 aufgestrahlt wird, und vorzugsweise auch lotrecht zu der Außenseite des Prüfkopfes 6 verläuft, in welcher sich das Durchlass 23a für den Laserstrahl befindet.

Der reflektierte Laserstrahl wird im Prüfkopf 6 nicht direkt auf dem optischen Sensor 12 empfangen, sondern über einen Spiegel 19 umgelenkt.

Diese Umlenkung ist für die abgewandelte Scheimpfluganordnung jedoch irrelevant, so dass von einer Bildebene 37 auszugehen ist, als ob der Spiegel 19 von dem reflektierten Licht ohne Umlenkung durchlaufen würde und sich der optische Sensor 12 im entsprechenden Abstand hinter dem Spiegel 19 befinden würde.

Eine Optik in Form einer Sammellinse 38 ist in der Regel unmittelbar vor dem Sensor 12 angeordnet, so dass sich die Linsenebene 22 nur um einen sehr geringen Winkelbetrag von der Bildebene 37 unterscheiden muss, damit sich beide zusammen mit der Objektebene, also der BeleuchtungsEbene 17', in einer gemeinsamen Achse A schneiden.

### BEZUGSZEICHENLISTE

- 1: Objekt
- 2: Lötnaht, Prüfkontur, Oberfläche, Objektebene
- 2': Prüfstelle
- 2a: Erhebung
- 3: Lichtstrahl, Beleuchtungsrichtung
- 4,4a-b: Abbild
- 5,5': Blickrichtung
- 6: Prüfkopf
- 6a,b: Detektoreinheit
- 7: Bewegungsrichtung, Fortschrittsrichtung
- 8: Erstreckungsrichtung
- 9: Bilddatenspeicher
- 10: Bilddaten
- 11: elektronische Verarbeitungseinheit, Auswerteeinheit
- 12, 12': optischer Sensor
- 13a, b: paralleler Ausgang
- 14: Lichtquelle
- 15: Interner Speicher
- 16: Gehäuse
- 17: Abstrahlrichtung,
- 17': Beleuchtungsebene
- 18: Beobachtungsbreite, Beobachtungsbereich
- 19: Spiegel
- 20: Betrachtungsebene, Hauptebene
- 21: Lotrechte
- 22: Objektivebene
- 23: Durchlass
- 24: Platine
- 26: Stecker
- 29: Sicherheitsbereich
- 30: interessierender Bereich
- 31: diffuse Lichtquelle
- 32: Lichtkegel
- 33: Fehlstelle
- 34: heller Bereich
- 35: grauer Bereich
- 36: strukturierter Bereich
- 37: Bildebene
- 38: Sammel-Linse
- 39: Zentralstrahl

- 104,104': Abbild

## Patentansprüche

1. Verfahren zum berührungslosen, optischen Prüfen von 3-dimensionalen, längsverlaufenden Prüfkonturen (2) auf einer Objekt-Oberfläche auf Unregelmäßigkeiten, insbesondere Vertiefungen (2a), mittels z. B. des Lichtschnitt-Triangulationsverfahrens,
wobei
als dreidimensionale Überprüfung mittels gerichteter Beleuchtung, insbesondere mittels Laserlicht, auf die Prüfkontur (2) eine quer zu deren Verlaufsrichtung (33) liegende Lichtlinie aufgestrahlt und das von der Prüfkontur (2) reflektierte Licht von wenigstens einem optischen Sensor (12) als linienförmiges Abbild (4) aufgenommen und ausgewertet wird,
als zweidimensionale Überprüfung die Prüfkontur (2) mittels diffuser Beleuchtung beleuchtet wird und das von der Prüfkontur (2) im Bereich der zuvor aufgestrahlten Lichtlinie reflektierte Licht von wenigstens einem optischen Sensor (12) als Abbild (104) aufgenommen und ausgewertet wird,
**dadurch gekennzeichnet, dass**
das linienförmige Abbild (4) aus der dreidimensionalen Überprüfung mit dem Abbild (104) aus der zweidimensionale Überprüfung daraufhin automatisch miteinander verglichen wird, ob eines der Abbilder (4, 104) einen Fehler der Prüfkontur (2) zeigt, der in dem anderen Abbild (104, 4) nicht sichtbar war.

2. Verfahren nach einem der vorhergehenden Ansprüche,
**dadurch gekennzeichnet, dass**
für die zweidimensionale Überprüfung und die dreidimensionale Überprüfung jeweils der gleiche optische Sensor (12) verwendet wird.

3. Verfahren nach einem der vorhergehenden Ansprüche,
**dadurch gekennzeichnet, dass**
für das Bestimmen des Abbildes (104) aus der zweidimensionale Überprüfung
- entweder nur diejenigen Zeilen des optischen Sensors (12) aus gelesen werden, die zuvor von der dem linienförmigen Abbild (4) betroffen waren
- und insbesondere aus diesen Zeilen nur diejenigen Pixel des optischen Sensors (12) verwendet werden, in denen zuvor die das linienförmige Abbild (4) vorlag, und ggf. zusätzlich ein Sicherheitsraum um diese Pixel herum.

4. Verfahren nach einem der vorhergehenden Ansprüche,
**dadurch gekennzeichnet, dass**
ein Prüfkopf (6) in Verlaufsrichtung (33) relativ zur Prüfkontur (2) bewegt wird, und dabei einzelne Abbilder (4, 104) der zu prüfenden Längspositionen (2') anfertigt, die vorzugsweise die Prüfkontur (2) in Verlaufsrichtung (33) vollständig abdecken, und die zurückgelegte Strecke des Prüfkopfes (6) zwischen der Erstellung des linienförmigen Abbildes (4) für die dreidimensionale Überprüfung und des Abbildes (104) für die zweidimensionale Überprüfung beim Vergleich hinsichtlich der Positionierung in Längsrichtung rechnerisch kompensiert wird.

5. Verfahren nach einem der vorhergehenden Ansprüche,
**dadurch gekennzeichnet, dass**
bei der zweidimensionalen Überprüfung mehrere Abbilder (104) mit unterschiedlichen Beleuchtungsstärken und/oder Beleuchtungs-Farben erstellt und bei unterschiedlichen Beleuchtungsstärken das qualitativ beste Abbild (104) oder bei unterschiedlichen Beleuchtungs-Farben ein farblich zusammengesetztes Farbbild verwendet wird.

6. Verfahren nach einem der vorhergehenden Ansprüche,
**dadurch gekennzeichnet, dass**
bei einer Breite (b) des linienförmigen Abbildes (4) der Lichtlinie von mehr als einem Pixel des optischen Sensors (12) das linienförmige Abbild (4) auf eine Abfolge von Profilpunkten (32) in Erstreckungsrichtung (8) reduziert wird.

7. Verfahren nach einem der vorhergehenden Ansprüche,
**dadurch gekennzeichnet, dass**
als Querposition des Profilpunktes (32) innerhalb des linienförmigen Abbildes (4)
- die Position des Schwerpunktes der über die Breite (b) des Abbildes (4) verteilten Lichtintensitäten oder
- die Position des Pixels mit der höchsten Lichtintensität über die Breite (b) an dieser Längsposition oder
- dasjenige Pixel in der Mitte der Breite (b) des Abbildes der Lichtlinie gewählt wird.

8. Verfahren nach einem der vorhergehenden Ansprüche,
**dadurch gekennzeichnet, dass**
- das zweidimensionale Abbild (104) erstellt wird nach dem Erstellen der dreidimensionalen Abbilder (4) entlang der gesamten Länge der Prüfkontur (2) oder
- das zweidimensionale Abbild (104) erstellt wird nach Herstellung einer vorgegebenen Anzahl von dreidimensionalen Abbildern (4) der Lichtlinie entlang der Prüfkontur (2).

9. Verfahren nach einem der vorhergehenden Ansprüche,
**dadurch gekennzeichnet, dass**
- vor Erstellen des zweidimensionalen Abbildes (104) zur Vermeidung von Über- und Unterbelichtungen Ober- und Untergrenzen der Lichtintensität für das einzelne Pixel auf dem optischen Sensor (12) vorgegeben werden und
- bei Intensitäten außerhalb dieses Soll-Bereiches die Beleuchtungsstärke durch Verändern der Belichtungszeit oder der Leistung der Lichtquelle oder eine Kombination von beiden verändert wird, bis die Intensität der einzelnen Pixel innerhalb des Soll-Bereiches liegt.

10. Verfahren nach Anspruch 9,
**dadurch gekennzeichnet, dass**
bei der anschließenden Erstellung des zweidimensionalen Abbildes (104) die Veränderung der Beleuchtungsstärke gegenüber der normalen Beleuchtungsstärke beim Ermitteln der Lichtintensität eines Pixels rechnerisch mitberücksichtigt wird.

11. Vorrichtung zum berührungslosen, optischen Prüfen von 3-dimensionalen, längsverlaufenden Prüfkonturen (2) auf Unregelmäßigkeiten, insbesondere Vertiefungen (2a), mittels z. B. des Lichtschnitt-Triangulationsverfahrens, mit einem optischen Prüfkopf (6), der
- einen optischen Sensor (12),
- eine Lichtquelle für gerichtete Beleuchtung zur dreidimensionalen Überprüfung, insbesondere eine Laserlicht-Quelle (14),
- wenigstens eine Lichtquelle (31) für diffuses Licht zur zweidimensionalen Überprüfung und
- eine Auswerteeinheit (11) zum Auswerten der Abbilder aus der dreidimensionalen und der zweidimensionalen Überprüfung und zum Vergleichen der Abbilder aus der gerichteten Lichtquelle (14) und der diffusen Lichtquelle (31), ob eines der Abbilder (4,104) einen Fehler der Prüfkontur (2) zeigt, der in dem anderen Abbild (104,4) nicht sichtbar war, umfasst.

12. Vorrichtung nach Anspruch 11,
**dadurch gekennzeichnet, dass**
der Prüfkopf (6) mehrere diffuse Lichtquellen (31) umfasst, deren Lichtkegel (32) so ausgerichtet sind, dass der gewünschte Beobachtungsbereich auf der Prüfoberfläche von allen Lichtkegeln (32) vollständig beleuchtet wird.

13. Vorrichtung nach einem der vorhergehenden Ansprüche,
**dadurch gekennzeichnet, dass**
die Vorrichtung nur einen einzigen optischen Sensor (12) umfasst.

14. Vorrichtung nach einem der vorhergehenden Ansprüche,
**dadurch gekennzeichnet, dass**
die diffusen Lichtquellen (31) möglichst nahe und symmetrisch zur Lichtquelle für die gerichtete Beleuchtung angeordnet sind, insbesondere in einer oder zwei Linien, die quer zur Fortschrittsrichtung bei der Abfassung der Prüfkontur liegen.

15. Vorrichtung nach einem der vorhergehenden Ansprüche,
**dadurch gekennzeichnet, dass**
die Bildebene des wenigstens einen optischen Sensors (12) die Hauptebene des Objektivs im Strahlengang und die Objekt-Oberfläche sich in einer gemeinsamen Geraden schneiden.

## Claims

1. A method for touch free optical scanning of three dimensional longitudinally extending scanning contours (2) on a surface of an object with respect to unevenness, in particular indentations (2a), e.g. by a light intersection triangulation method,
wherein
a line of light that is irradiated onto the scanning contour (2) transversal to a direction of extension of the scanning contour as a three dimensional test using oriented illumination, in particular by laser light and wherein light that is reflected by the scan contour (2) is captured by at least one optical sensor (12) as a line shaped image (4) and processed,
wherein the scan contour (2) is illuminated by a diffuse light for two dimensional testing of the scan contour and light reflected by the scan contour (2) in a portion of the previously irradiated line of light is received by at least one optical sensor (12) as an image (104) and processed,
**characterized in that** the linear image (4) from the three dimensional testing is automatically compared with the image (104) from the two dimensional testing to determine whether one of the images (4, 104) shows a void in the scan contour (2) which was not visible in the other image (104, 4).

2. The method according to one of the preceding claims, **characterized in that** an identical optical sensor (12) is used respectively for the two dimensional scanning and the three dimensional scanning.

3. The method according to one of the preceding claims, **characterized in that** the image (104) from the two dimensional scanning is determined
- either by only reading the lines of the optical sensor (12) which were previously affected by the line image (4),
- and in particular from these lines solely those pixels of the optical sensor (12) are used in which the line shaped image (4) was previously present and optionally additionally a safety space about these pixels.

4. The method according to one of the preceding claims,
**characterized in that**
a scanning head (6) is moved in an extension direction (33) relative to the scan contour (2) so that the scanning head generates individual images (4, 104) of the longitudinal positions (2') to be tested which advantageously completely cover the scan contour (2) in its direction of extension (33) and the covered distance of the scanning head between generating the line shaped image (4) for the three dimensional scanning and of the image (104) for the two dimensional scanning is mathematically compensated during the comparison with respect to the positioning in the longitudinal direction.

5. The method according to one of the preceding claims, **characterized in that** the two dimensional scanning generates plural images (104) with different illumination strengths and/or illumination colors and a best quality image (104) is used from images taken at different illumination strengths, or for different illumination colors a color composed color image is used.

6. The method according to one of the preceding claims, **characterized in that** the line shaped image (4) is reduced to a sequence of profile points (32) in the extension (8) for a width (b) of the line shaped image (4) of the light line of more than one pixel of the optical sensor (12).

7. The method according to one of the preceding claims,
**characterized in that**
for a transversal position of the profile point (32) within the line shaped image (4)
- a position of a center of gravity of light intensities distributed over a width (b) of the image (4) is selected or
- a position of a pixel with maximum light intensity over the width (b) at this longitudinal position is selected or
- a pixel in a center of the width (b) of the image of the light line is selected.

8. The method according to one of the preceding claims,
**characterized in that**
- the two dimensional image (104) is generated after generating the three dimensional images (4) along an entire length of the scan contour (2) or,
- the two dimensional image (104) is generated after generating a predetermined number of three dimensional images (4) of the light line along the scan contour (2).

9. The method according to one of the preceding claims,
**characterized in that** the
- before generating the two dimensional image (104) for preventing over exposure and under exposure upper and lower thresholds of light intensity are predetermined for the individual pixel on the optical sensor (12), and
- for intensities outside of a nominal range illumination intensities are varied by changing the illumination time or the power of the light source or a combination of both until an intensity of the individual pixels is within the nominal range.

10. The method according to claim 9,
**characterized in that** the
a change of an illumination strength relative to a normal illumination strength is considered computationally when determining a light intensity of a pixel during subsequent generation of the two dimensional image (104).

11. A device for touch free optical scanning of the three dimensional longitudinal oriented scan contours (2) with respect to unevenness, in particular indentations (2a), for example by a light intersection triangulation method with an optical scanning head (6), comprising
- an optical sensor (12),
- a light source for oriented illumination for three dimensional scanning, in particular a laser light source (14),
- at least one light source (31) for diffused light for two dimensional scanning, and
- a processing unit (11) for processing images from the two dimensional scanning and the three dimensional scanning and for comparing images from the oriented light source (14) and the diffuse light source (31) whether one of the images (4, 104) shows a void of the scan contour (2) which was not visible in the other image (104, 4).

12. The device according to claim 11,
**characterized in that**
the scanning head (6) includes plural diffuse light sources (31), whose light cones (32) are oriented so that a desired scanning area on the scanning surface is completely illuminated by all light cones (32).

13. The device according to one of the preceding claims,
**characterized in that**
the device only includes a single optical sensor (12).

14. The device according to one of the preceding claims,
**characterized in that**
the diffuse light sources (31) are arranged as close as possible and symmetrical to the light source for directed illumination, in particular in one or two lines which are arranged transversal to a processing direction when scanning the scan contour.

15. The device according to one of the preceding claims,
**characterized in that**
the image plane of the at least one optical sensor (12), the main plane of the object in the beam path and the object surface intersect in a common straight line.

## Revendications

1. Procédé destiné à la vérification optique, sans contact, de contours tridimensionnels longitudinaux à vérifier (2) sur une surface d'objet, afin de relever des irrégularités, notamment des renfoncements (2a), à l'aide, par exemple, de la méthode de coupe optique par triangulation, la vérification tridimensionnelle au moyen d'un éclairage dirigé, notamment au moyen d'une lumière laser, consistant à projeter sur le contour à vérifier (2) une ligne lumineuse transversalement au sens d'extension (33) de celui-ci, la lumière réfléchie par le contour à vérifier (2) étant captée et évaluée par au moins un capteur optique (12) sous la forme d'une image linéaire (4), la vérification bidimensionnelle consistant à éclairer le contour à vérifier (2) au moyen d'un éclairage diffus, la lumière réfléchie par le contour à vérifier (2) dans la zone de la ligne lumineuse préalablement projetée étant captée et évaluée sous la forme d'une image (104) par au moins un capteur optique (12),
**caractérisé en ce que**
l'image linéaire (4) issue de la vérification tridimensionnelle et l'image (104) issue de la vérification bidimensionnelle sont ensuite comparées automatiquement, l'une à l'autre, afin de déterminer si une des images (4, 104) révèle un défaut du contour à vérifier (2) qui n'était pas visible dans l'autre image (104, 4).

2. Procédé suivant une des revendications précédentes,
**caractérisé en ce que**
le même capteur optique (12) est respectivement utilisé pour la vérification bidimensionnelle et la vérification tridimensionnelle.

3. Procédé suivant une des revendications précédentes,
**caractérisé en ce que**
pour déterminer l'image (104) issue de la vérification bidimensionnelle, ne sont lues que les lignes du capteur optique (12) concernées préalablement par l'image linéaire (4) et, parmi ces lignes, ne sont notamment utilisés que ceux des pixels du capteur optique (12), dans lesquels l'image linéaire (4) était préalablement présente et, le cas échéant, en plus, un espace de sécurité autour de ces pixels.

4. Procédé suivant une des revendications précédentes,
**caractérisé en ce que**
un palpeur (6) est déplacé dans le sens d'extension (33) par rapport au contour à vérifier (2) et **en ce que**, pendant son déplacement, le palpeur (6) crée des images individuelles (4, 104) des positions longitudinales (2') à vérifier qui recouvrent, de préférence, intégralement le contour à vérifier (2) dans le sens d'extension (33) et **en ce que** le parcours effectué par le palpeur (6) entre la création de l'image linéaire (4) pour la vérification tridimensionnelle et la création de l'image (104) pour la vérification bidimensionnelle (20) est compensé par calcul lors de la comparaison relative au positionnement dans le sens longitudinal.

5. Procédé suivant une des revendications précédentes,
**caractérisé en ce que**
lors de la vérification bidimensionnelle, plusieurs images (104) sont créées avec différentes intensités d'éclairage et/ou couleurs d'éclairage et qu'à intensités d'éclairage différentes, c'est l'image (104) présentant la meilleure qualité, ou, à différentes couleurs d'éclairage, c'est une image couleur composée de différentes couleurs, qui est utilisée.

6. Procédé suivant une des revendications précédentes,
**caractérisé en ce que**
à une largeur (b) de l'image linéaire (4) de la ligne de lumière de plus d'un pixel du capteur optique (12), l'image linéaire (4) est réduite à une suite de points de profil (32) dans le sens d'extension (8).

7. Procédé suivant une des revendications précédentes,
**caractérisé en ce que**
comme position transversale du point de profil à l'intérieur de l'image linéaire (4), c'est
- la position du point de gravité des intensités de lumière réparties sur la largeur (b) de l'image (4) ou
- la position du pixel présentant l'intensité de lumière la plus élevée sur la largeur 15 (b) en cette position longitudinale ou
- le pixel situé au centre de la largeur (b) de l'image de la ligne de lumière, qui est sélectionné.

8. Procédé suivant une des revendications précédentes,
**caractérisé en ce que**
- l'image bidimensionnelle (104) est créée après la création des images tridimensionnelles (4) le long de l'intégralité de la longueur du contour à vérifier (2) ou
- l'image bidimensionnelle (104) est créée après la création d'un nombre prédéterminé d'images tridimensionnelles (4) de la ligne de lumière le long du contour à vérifier (2).

9. Procédé suivant une des revendications précédentes,
**caractérisé en ce que**
- au préalable de la réalisation de l'image bidimensionnelle (104), des plafonds et des planchers d'intensité de lumière sont prédéfinis pour le pixel individuel sur le capteur optique (12), afin d'éviter des surexpositions et des sous-exposition, et
- à intensités situées hors de la plage de consigne, l'intensité d'éclairage est modifiée en variant le temps d'exposition ou la puissance de la source de lumière ou en combinant les deux jusqu'à ce que l'intensité des pixels individuels se situe à l'intérieur de la plage de consigne.

10. Procédé suivant la revendication 9,
**caractérisé en ce que**
la modification de l'intensité d'éclairage par rapport à l'intensité d'éclairage normale est prise en compte par calcul lors de la détermination de l'intensité d'un pixel, lorsque l'image bidimensionnelle (104) est créée.

11. Dispositif destiné à la vérification optique, sans contact, de contours longitudinaux à vérifier (2), afin de relever des irrégularités, notamment des renfoncements (2a), à l'aide, par exemple, de la méthode de coupe optique par triangulation, au moyen d'un palpeur optique (6) qui comprend
- un capteur optique (12),
- une source de lumière destinée à produire un éclairage dirigé pour la vérification tridimensionnelle, notamment une source de lumière laser (14),
- au moins une source de lumière (31) destinée à produire une lumière diffuse pour la vérification bidimensionnelle, et
- une unité d'évaluation (11) pour évaluer les images issues des vérifications tridimensionnelle et bidimensionnelle et pour comparer les images issues de la source de lumière dirigée (14) et de la source de lumière diffuse (31), afin de déterminer si une des images (4, 104) révèle un défaut du contour à vérifier (2) qui n'était pas visible dans l'autre image (104, 4).

12. Dispositif suivant la revendication 11,
**caractérisé en ce que**
le palpeur (6) comprend plusieurs sources de lumière diffuse (31), dont les faisceaux lumineux (32) sont orientés de façon que la zone d'observation souhaitée sur la surface à vérifier soit intégralement éclairée par tous les faisceaux lumineux (32).

13. Dispositif suivant une des revendications précédentes,
**caractérisé en ce que**
ledit dispositif ne comprend qu'un seul capteur optique (12).

14. Dispositif suivant une des revendications précédentes,
**caractérisé en ce que**
les sources de lumière diffuse (31) sont disposées le plus près et le plus symétriquement possible par rapport à la source de lumière destinée à produire l'éclairage dirigé, notamment dans une ou deux lignes qui s'étendent transversalement à la direction de progression lors du captage du contour à vérifier.

15. Dispositif suivant une des revendications précédentes,
**caractérisé en ce que**
le plan image de l'au moins un capteur optique (12), le plan principal de l'objectif dans le trajet du faisceau et la surface de l'objet se coupent sur une droite commune.
